# EUROPÄISCHE PATENTSCHRIFT

(11) **EP 2 674 316 B1**
(45) Veröffentlichungstag und Bekanntmachung des Hinweises auf die Patenterteilung: **11.01.2017**
(21) Anmeldenummer: 13168582.8
(22) Anmeldetag: 21.05.2013
(51) Int. Cl.: B60K 11/08, B60K 11/04, B60H 1/00

(54) **STEUERBARER LUFTEINLASS FÜR EIN KRAFTFAHRZEUG**
Controllable air inlet for a motor vehicle
Admission d'air pouvant être commandée pour un véhicule automobile

(30) Priorität: 13.06.2012 DE 102012011594
(43) Veröffentlichungstag der Anmeldung: 18.12.2013
(73) Patentinhaber: Decoma (Germany) GmbH, 66280 Sulzbach / Saar (DE)
(72) Erfinder: Knauer, Bernd, 73733 Esslingen (DE)
(74) Vertreter: Rausch, Gabriele

(56) Entgegenhaltungen:
- DE-A1-102009 009 141
- GB-A- 2 442 141

## Beschreibung

Die Erfindung betrifft einen steuerbaren Lufteinlass für ein Kraftfahrzeug nach der Art von Anspruch 1.

In modernen Kraftfahrzeugen wird zur Verbesserung des Warmlauftverhaltens des Motors der Luftstrom zum Wärmetauscher mittels verstellbaren Elementen gesteuert. Bei den verstellbaren Elementen, den Schließelementen handelt es sich zumeist um eine Anzahl schwenkbar gelagerter Lamellen, wobei deren Schwenkachsen parallel zueinander orientiert und diese insgesamt in einem Rahmen drehbar angeordnet sind. Der Rahmen samt der Lamellenanordnung ist dem Kühlergrill nachgeordnet und dem Wärmetauscher des Motors vorgeordnet. Eine derartige Anordnung kann auch in einem Strömungskanal angeordnet sein, über den Kühlluft von einer in der Karosserie angeordneten Öffnung zu dem Wärmetauscher, dem Kühler des Motors zugeführt wird. Durch Schließen der Frischluftzufuhr während des Warmlaufens bzw. durch Steuern der Kühlluftmenge entsprechend der Motortemperatur wird die optimale Betriebstemperatur schneller erreicht bzw. kann innerhalb eines engen Temperaturbereiches gehalten werden.

Beispiele für die beschriebenen Einrichtungen zeigen die EP 2 233 341 A1, die EP 2 233 342 A1, die EP 2 325 035 A1, die DE 10 2008 049 010 A1, die DE 20 2005 010 683 U1 sowie die DE 60 2004 007 338 T2.

Die gezeigten Schließelemente sind als längliche Flächenelemente in im Wesentlichen ebener Form ausgebildet und um eine meist mittig durch das Flächenelement gehende Achse verschwenkbar. Im geschlossenen Zustand werden derartig gestaltete Elemente durch den auf sie einwirkenden Luftdruck ungünstig belastet. Im geöffneten Zustand liegen die Schließelemente im Luftstrom, so dass der Querschnitt für den Luftdurchtritt verringert wird. Eine Lamelle mit einem stromlinienförmigen Querschnitt zeigt die EP 2 335 963 A1. Die strömungstechnischen Wirkungen auf das Schließelement werden dadurch etwas minimiert, nicht jedoch grundsätzlich vermieden.

Bei der aus der gattungsbildenden DE 10 2009 009 141 A1 bekannten Lösung sind u. a. schwenkbar gelagerte Schließelemente vorgesehen, welche jeweils in einem Luftdurchtrittsspalt angeordnet sind. Diese schwenkbaren Schließelemente schwenken offensichtlich gleichsinnig zum Öffnen, Schließen der jeweiligen Spalte.

Die DE 20 2004 010 030 U1 zeigt flächig ausgebildete Staudruckklappen in einer Lüfterzarge. Sollbruchlinien ermöglichen eine werkzeugoptimierte Herstellung einer solchen Lüfterzarge.

Die DE 10 2004 026 419 A1 beschreibt eine Vorrichtung zur Abstimmung des Luftdurchsatzes im Frontbereich eines Kraftfahrzeuges, bestehend aus einer jeweils Klappen aufweisenden oberen und einer unteren Luftabgriffszone.
Aus der DE 1020090091414 sind verschwenkbare Schließlamellen bekannt, die zylinderförmige ausgerichtet sind und sich gleichsinnig verdrehen. Aus der GB2442141 ist eine Einrichtung bekannt, die Lamellen ansteuert und so einen Luftdurchlass regelt.
Die Aufgabe der vorliegenden Erfindung besteht darin, einen steuerbaren Lufteinlass in gegenüber den bekannten Ausführungen verbesserter Ausführung zu schaffen.

Diese Aufgabe wird gelöst durch die Merkmale von Anspruch 1. Weiterbildungen ergeben sich aus den Unteransprüchen.

Gemäß der Erfindung ist ein steuerbarer Lufteinlass für ein Kraftfahrzeug vorgesehen, insbesondere zur Steuerung der einem Wärmetauscher oder sonstigen Kühleinrichtung einer Verbrennungskraftmaschine zuzuführenden Luft, bestehend aus einem Paar gegensinnig um je eine Achse schwenkbarer Schließelemente, wobei die Schwenkachsen parallel zu einander verlaufen, wobei das Paar Schließelemente in einem Rahmen angeordnet ist, der die Schließelemente lagert und insgesamt den maximalen Durchsatz für den Luftstrom definiert, ein Schließelement dem oberen Rahmenelement, das zweite Schließelement dem unteren Rahmenelement zugeordnet ist, und jedes Schließelement eine in Richtung des zu steuernden Luftstromes weisende Fläche aufweist, welche im Wesentlichen zylinderförmig zu der dem Schließelement zugeordneten Schwenkachse ausgeführt ist. Im geschlossenen Zustand weisen die zylinderförmigen Außenseiten der Zylinderlamellen in Richtung des zu steuernden Luftstroms und verschließen die offene Fläche des Rahmens vollständig. Im geöffneten Zustand sind die Zylindermatelabschnitte der Schließelemente nach oben bzw. nach unten verschwenkt, so dass der Querschnitt des Rahmens freigegeben ist.

Gemäß einer Ausführungsform der Erfindung ist das Schließelement als ein Abschnitt eines Zylindermantels, als eine Zylinderlamelle ausgebildet. Dieser Zylindermantelabschnitt ist beidseitig von je einer Platte begrenzt, welche die das Schließelement tragende Achse insbesondere in Form von Lagerzapfen aufweisen.

Durch die beschriebene Formgebung der Schließelemente weisen diese eine hohe Steifigkeit entgegen dem zu steuernden Luftstrom auf. Zusätzlich können an der Innenseite des Zylindermantelabschnittes ein oder mehrere Versteifungsrippen angeformt sein.

Des Weiteren erfolgt die Erläuterung eines Ausführungsbeispiels der Erfindung an Hand der Zeichnungen.

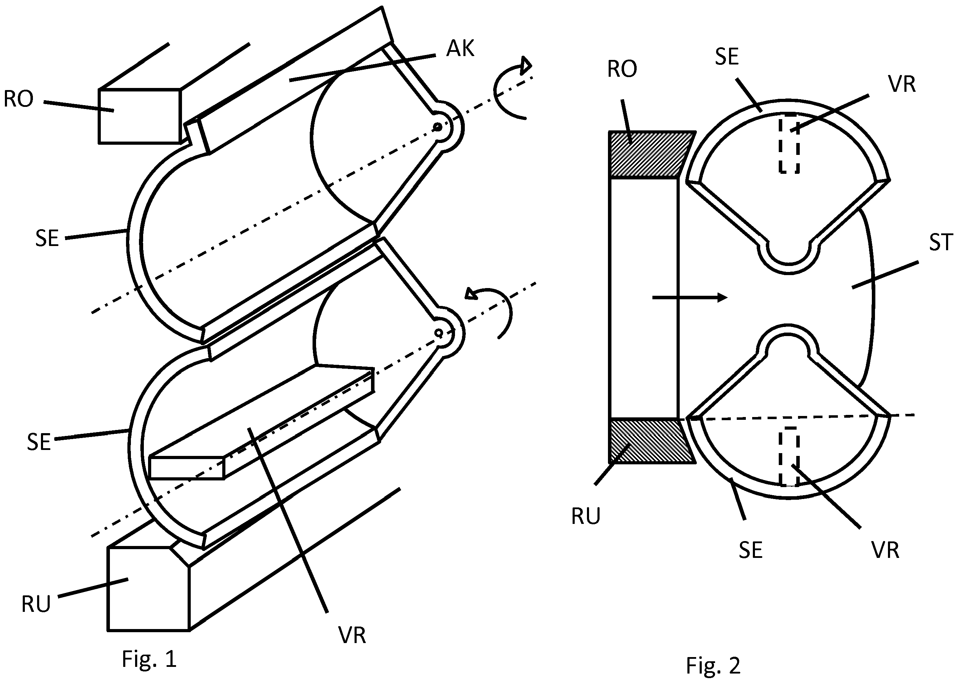

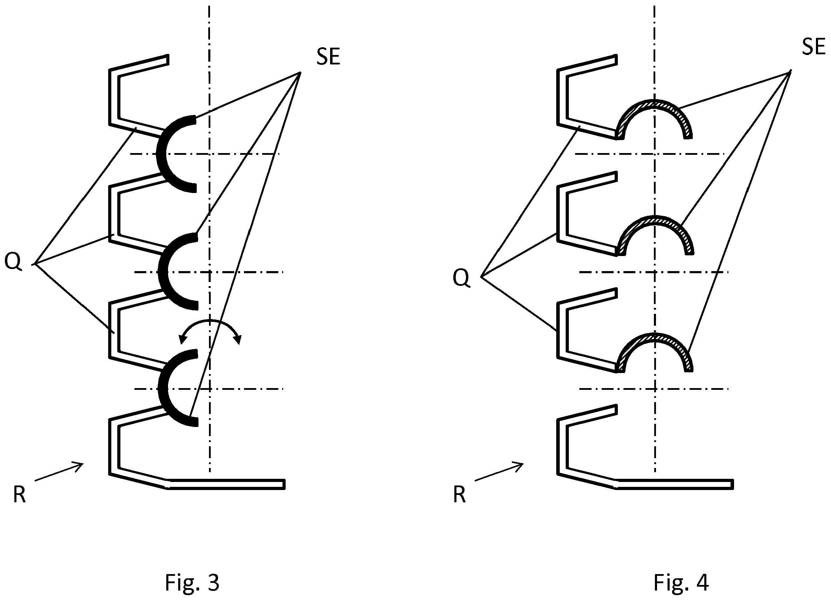

Figur 1 zeigt in perspektivischer Darstellung einen Schnitt durch einen Rahmen mit einer oberen und einer unteren Rahmenteil RO, RU. In zwei sich gegenüberliegenden Seitenteilen ST des Rahmens sind die Zapfen je eines als Zylindermatelabschnitt gestalteten Schließelementes SE gelagert. In Figur 1 ist der geschlossene Zustand des Lufteinlasses gezeigt, bei dem die konkaven Außenseiten der als Zylindermantelabschnitte gestalteten Schließelemente SE den Lufteintritt verhindern. An dem oberen sowie dem unteren Schließelement SE, je einer Endkante der Außenfläche ist eine mit dem jeweiligen Rahmenteil RO, RU zusammenwirkende Anschlagkontur AK angeformt, welche die Verschwenkbewegung des Schließelementes SE in Schließrichtung begrenzt. In der Figur 1 ist diese Anschlagkontur AK lediglich an dem oberen Schließelement dargestellt. Die gegensinnigen Verschwenkrichtungen der beiden Schließelemente SE um deren Schwenkachsen ist in Figur 1 mit den Pfeilen wiedergegeben.
Figur 2 zeigt den geöffneten Zustand des Lufteinlasses. Die Schließelemente SE sind nach oben und nach unten verschwenkt und geben so die durch die Rahmenteile RO, RU und die Seitenteile ST begrenzte durchströmbare Fläche des Rahmens vollständig frei. Die Einströmrichtung der Luft ist in Figur 2 mit dem Pfeil wiedergegeben.

In den Figuren 1 und 2 ist gestrichelt angedeutet den Schließelementen SE an der konkaven Innenseite je eine sich über die Länge des Schließelementes SE erstreckende Verstärkungsrippe VR angeformt. Diese Verstärkungsrippe erhöht die Steifigkeit des Schließelementes, insbesondere in der Stellung, in der der Luftdurchlass vollständig geschlossen wird.

Im gezeigten Ausführungsbeispiel sind die als Zylindermantelabschnitte gestalteten Schließelemente SE über einen nicht dargestelten Aktuator gemeinsam verstellbar. Entsprechend sind die Schließelemente SE getriebetechnisch miteinander gekoppelt - bspw. über Zahnsegmente oder ein Koppelgestänge. Auch kann vorgesehen sein, dass die einzelnen Schließelemente SE durch je einen zugeordneten Aktuator individuell verstellt werden können.

### Bezugszeichenliste

- R: Rahmen
- RO: Rahmen Oberteil, obere Strebe
- RU: Rahmen Unterteil, untere Strebe
- ST: Rahmen Seitenteil
- SE: Schließelement, Zylindermantelabschnitt, Walzenlamelle
- VR: Verstärkungsrippe

## Patentansprüche

1. Steuerbarer Lufteinlass für ein Kraftfahrzeug, insbesondere zur Steuerung der einem Wärmetauscher oder sonstigen Kühleinrichtung einer Verbrennungskraftmaschine zuzuführenden Luft, bestehend aus schwenkbarer Schließelemente (SE), wobei die Schwenkachsen parallel zu einander verlaufen, wobei die Schließelemente (SE) in einem Rahmen angeordnet sind , der die Schließelemente (SE) lagert und insgesamt den maximalen Durchsatz für den Luftstrom definiert, und jedes Schließelement (SE) eine in Richtung des zu steuernden Luftstromes weisende Fläche aufweist, welche im Wesentlichen zylinderförmig zu der dem Schließelement (SE) zugeordneten Schwenkachse ausgeführt ist, **dadurch gekennzeichnet, dass** die Schließelemente (SE) als Paar gegensinnig um je einen Achse schwenkbar sind und
ein oberes Schließelement (SE) dem oberen Rahmenelement (RO), das zweite, untere Schließelement (SE) dem unteren Rahmenelement (RU) zugeordnet ist, an dem oberen sowie dem unteren Schließelement (SE), an einer Endkante der Außenfläche eine mit dem jeweiligen Rahmenteil (RO, RU) zusammenwirkende Anschlagkontur (AK) angeformt ist, welche die Verschwenkbewegung des Schließelementes (SE) in Schließrichtung begrenzt.

2. Steuerbarer Lufteinlass nach Anspruch 1,
das Schließelement (SE) ist als ein Abschnitt eines Zylindermantels ausgebildet.

3. Steuerbarer Lufteinlass nach Anspruch 1 oder 2,
das Schließelement (SE) ist als ein auf der dem zu steuernden Luftstrom abgewandten Seite konkav gestalteter Körper ausgebildet.

4. Steuerbarer Lufteinlass nach einem der vorhergehenden Ansprüche,
das Schließelement (SE) ist beidseitig von je einer Platte begrenzt, welche die das Schließelement (SE) tragende Achse in Form von Lagerzapfen aufweisen.

## Claims

1. Controllable air inlet for a motor vehicle, in particular for controlling the air to be supplied to a heat exchanger or other cooling device of an internal combustion engine, consisting of pivotable closing elements (SE), wherein the pivot axes extend parallel to one another, wherein the closing elements (SE) are arranged in a frame which bears the closing elements (SE) and as a whole defines the maximum throughput for the airflow, and each closing element (SE) has a surface which faces in the direction of the airflow to be controlled and is formed substantially cylindrically to the pivot axis assigned to the closing element (SE), **characterized in that** the closing elements (SE) are pivotable as a pair in opposite directions about one axis each, and an upper closing element (SE) is assigned to the upper frame element (RO), the second, lower closing element (SE) is assigned to the lower frame element (RU), and a stop contour (AK) is integrally formed on the upper and the lower closing element (SE), on an end edge of the outer surface, said stop contour interacting with the respective frame element (RO, RU) and limiting the pivoting movement of the closing element (SE) in the closing direction.

2. Controllable air inlet according to Claim 1, the closing element (SE) being configured as a portion of a cylindrical outer surface.

3. Controllable air inlet according to Claim 1 or 2, the closing element (SE) being configured as a body of concave design on the side remote from the airflow to be controlled.

4. Controllable air inlet according to one of the preceding claims, the closing element (SE) being bounded on both sides by a respective plate, the plates having the axis, which bears the closing element (SE), in the form of bearing pins.

## Revendications

1. Admission d'air pouvant être commandée pour un véhicule automobile, en particulier pour commander l'air devant être acheminé à un échangeur de chaleur ou à un autre dispositif de refroidissement d'un moteur à combustion interne, constitué d'éléments de fermeture pivotants (SE), les axes de pivotement s'étendant parallèlement les uns aux autres, les éléments de fermeture (SE) étant disposés dans un cadre qui supporte les éléments de fermeture (SE) et qui définit dans l'ensemble le débit maximal du courant d'air, et chaque élément de fermeture (SE) présentant une surface orientée dans la direction du courant d'air à commander qui est réalisée essentiellement sous forme cylindrique vers l'axe de pivotement associé à l'élément de fermeture (SE), **caractérisée en ce que** les éléments de fermeture (SE) peuvent pivoter par paire en sens inverse autour d'un axe respectif et
un élément de fermeture supérieur (SE) est associé à l'élément de cadre supérieur (Ro), le deuxième élément de fermeture, inférieur (SE), est associé à l'élément de cadre inférieur (RU), un contour de butée (AK) coopérant avec la partie de cadre respective (RO, RU) est formé au niveau de l'élément de fermeture supérieur et de l'élément de fermeture inférieur (SE), au niveau d'une arête d'extrémité de la surface extérieure, lequel contour de butée limite le mouvement de pivotement de l'élément de fermeture (SE) dans la direction de fermeture.

2. Admission d'air pouvant être commandée selon la revendication 1, l'élément de fermeture (SE) est réalisé en tant que portion d'une enveloppe cylindrique.

3. Admission d'air pouvant être commandée selon la revendication 1 ou 2,
l'élément de fermeture (SE) est réalisé en tant que corps de configuration concave sur le côté opposé au courant d'air à commander.

4. Admission d'air pouvant être commandée selon l'une quelconque des revendications précédentes,
l'élément de fermeture (SE) est limité des deux côtés par une plaque respective, lesquelles plaques présentent l'axe portant l'élément de fermeture (SE) sous la forme de tourillons de palier.
